# EUROPEAN PATENT APPLICATION

(11) **EP 3 502 993 A1**
(43) Date of publication of application: **26.06.2019**
(21) Application number: 17210015.8
(22) Date of filing: 22.12.2017
(51) Int. Cl.: G06Q 20/32

(54) **A METHOD AND SYSTEM FOR CONDUCTING A TRANSACTION**

(71) Applicant: Mastercard International Incorporated, New York, NY 10577 (US)
(72) Inventor: Noë, James, West Wickham, Kent BR4 0BL (GB); Tierney, John, Merseyside, Cheshire CH60 7TF (GB)
(74) Representative: Murgitroyd & Company

(57) **Abstract**

A method operable at a payment terminal (20), for conducting a transaction, comprises: displaying (101) on a display (24) of the payment terminal (20) a first machine-readable optical label (300) encoding transaction data obtained from a merchant (70), the transaction data including at least an amount and a currency for the transaction; imaging (102) by a scanning device (26) of the terminal (20) a second machine-readable optical label (200) produced by a user device in response to receiving data for the first machine-readable optical label (300) and encoding payment details for the transaction; and providing (103) data from the second machine-readable optical label (200) to a payment network for authorisation of the transaction.

## Description

### Field

The present application relates to a method and system for conducting a transaction.

### Background

It is becoming more common for users to install payment applications on their mobile phones or indeed to use other wearable devices alone or in combination with their mobile phones to enable them to conduct financial transactions without directly employing or possessing a physical payment card. Such payment applications typically rely upon the user device on which they are installed or another device with which they are cooperating, for example, a wearable, having a Near-Field Communication (NFC) antenna enabling communicative coupling between the user device and a contactless payment terminal so that the user device can act as a proxy for a payment card.

There are nonetheless a large number of user devices which do not have NFC communications capability or where the user may have disabled such functionality because for example it can be perceived as a security risk to leave this enabled. Furthermore, some merchants may be put off by the cost of NFC enabled terminals.

Another problem arises when a user of an Internet client device wishes to conduct a transaction through a merchant website. If the client device is a shared device and, especially if it does not have a card reader, it may not be possible or desirable for the user to install a payment application on the client device and/or to input and possibly store their card details on the client device. Alternatively, even if such an Internet client device has a card reader, if the user does not have a physical card, it may not be possible to conduct a transaction.

It would therefore be desirable to enable users of such user or Internet client devices to make contactless payment transactions without needing to present a physical payment card at a point of sale.

### Summary

Accordingly, in a first aspect the application provides a method as detailed in claim 1. In a second aspect, there is provided a method as detailed in claim 10. Advantageous embodiments are provided in the dependent claims.

In further aspects, there are provided respective computer program products which when executed on a computing device are arranged to perform the steps of claims 1 or 10.

In still further aspects there are provided a payment terminal arranged to perform the steps of claim 1 and a user device arranged to perform the steps of claim 10.

### Brief Description Of The Drawings

The present application will now be described, by way of example, with reference to the accompanying drawings in which:
Figure 1 illustrates a system for conducting a transaction according to an embodiment of the invention;
Figure 2 illustrates process steps which are performed by the system of Figure 1; and
Figure 3 illustrates an exemplary device and payment terminal displaying QR™ codes during an exemplary process of the present teaching.

### Detailed Description

It will be appreciated that for simplicity and clarity, where considered appropriate, reference numerals may be repeated among the figures to indicate corresponding or analogous elements.

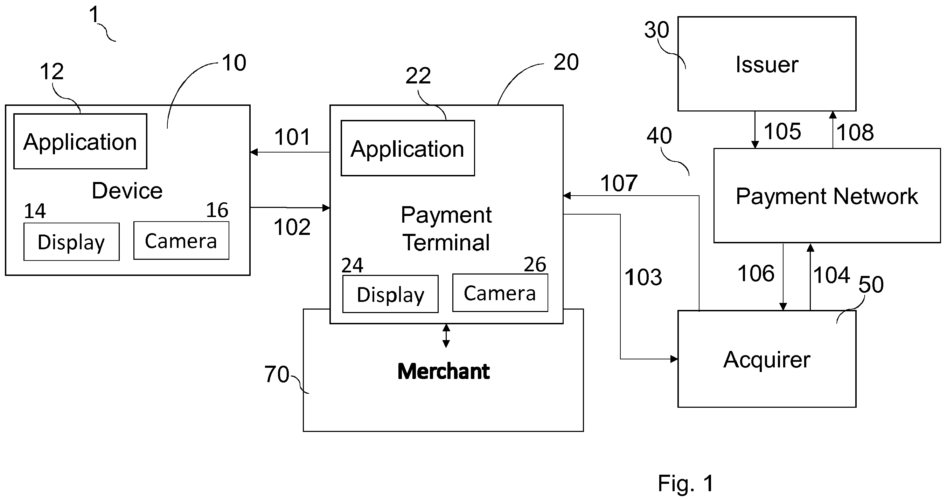

Figure 1 illustrates an exemplary system 1 according to an embodiment of the present invention for conducting a transaction between an account holder with a user device 10 and a merchant payment terminal 20.

The account holder, whether a customer or potential customer of any given merchant, may generally have a bank account and at least one payment card issued by one or more financial institutions. For simplicity, reference will be made in this description to "issuer" to refer to any financial institution or entity that provides a payment card to an account holder.

It will be understood that the payment network 40 is an operational network that can link bank accounts of the account holder and the merchant and provides for monetary exchange between the accounts of account holders and merchants and can be any of the networks operated by Mastercard® etc. It will be appreciated that the bank account of the merchant may be provided by any financial institution or entity. For simplicity, reference will be made in this description to "acquirer" 50 to identify the acquiring institution or entity. It will be appreciated that the acquirer 50 and the issuer 30 may be the same entity in which case the transaction may be routed directly from Acquirer to Issuer systems without using an intermediate payment network.

In Figure 1, a merchant system is represented by block 70. The merchant can be any of a retail trader, a dealer, or a business whether on-line or not. The block 70 indicates any infrastructure which is required to enable a merchant to conduct business and can comprise any combination of real-world infrastructure or on-line presence. At a minimum, this block could comprise an interface, a keypad or equivalent, on a point-of-sale (POS) payment terminal allowing a salesperson to manually enter an amount for a transaction. More common is where a customer is conducting a real-world transaction in a merchant premises, the payment terminal 20 functionality can be incorporated in or integrated with a conventional type POS terminal running a dedicated merchant application and be operated either automatically or by a salesperson and be equipped with at least one display 24 and also a camera 26. For some legacy terminals, this may involve retrofitting the camera 26 and possibly the display 24 (as a secondary display) to the terminal, for example, the camera 26 or display 24 could simply connect to the terminal 20 through a USB connection or a wireless connection, but it will be appreciated that providing a display 24 and camera 26 for the terminal 20 could alternatively involve connecting for example a smartphone, tablet or equivalent device to a terminal through a wired or wireless connection. In a still further alternative, the terminal 20 could equally be provided as a general purpose device such as a smartphone, tablet or equivalent device with a display and camera.

In some embodiments, the terminal 20 could include a card reader, possibly NFC enabled, and may by default look for a payment card or coupling of an NFC enabled device such as a mobile phone, wearable or contactless payment card for completion of a transaction in a conventional manner and only in the absence of such a card/coupling, attempt to conduct the transaction as will be described in more detail below. Nonetheless, it will be appreciated that embodiments of the invention can be equally implemented on terminals 20 which are not NFC enabled or do not have a card reader.

For example, for a merchant providing an online service, the payment terminal 20 with which a user device 10 interacts can comprise any Internet client device 20 including a display 24 and camera 26, for example, a typical webcam - whether belonging specifically to the user or being shared by the user with other users. Again, the camera 26 need not be integrally formed with the device 20 and could be retrofitted or otherwise connected to the Internet client device 20.

The payment terminal 20 may be provided with an application 22 as a service for the merchant system 70 to request a payment. The application 22 may be any ad-hoc digital or electronic application that provides the merchant system 70 with a secure mechanism for processing a payment via the payment terminal 20.

In the exemplary system 1, the application 22 is shown stored in the memory of the merchant payment terminal 20 with the payment terminal 20 communicating with an acquirer 50 via a wireless or wired connection. However, it will be understood that the application functionality can equally be distributed across any number of devices which ultimately provide a connection between the user device 10 and the payment network 40. So for example, for an e-commerce merchant, the application 22 can comprise a combination of client device software and server software, with the client device software interfacing with a user device 10 and the server software being configured to interface securely with merchant systems 70, which generate a request for payment of a given amount, and the acquirer 50 through the payment network 40.

In one embodiment, the user device 10 is a mobile device equipped with a display 14 and a front camera 16 and most typically such a device can comprise a smartphone, tablet or computer on which a payment application 12 is installed, or in some embodiments integrated directly into the operating system, enabling an account holder to conduct a transaction. The application 12 may be an electronic or digital wallet service and a user may store card details for one or more payment cards for use by the application 12.

Alternatively, the application 12 may be an ad-hoc digital or electronic application that provides the account holder with a secure method for payment via the device 10.

It will be understood that in the exemplary system 1, the application 12 is stored in the memory of the device 10 and can be operated without requiring a network connection. Alternatively, the device 10 may be equipped with an Internet interface and access application's functionalities via a network connection. In a further alternative, the application 12 may comprise a client application in communication with an application server (not shown) and a password may, for example, be requested for accessing the application server via the client application. Such an application server may be further configured to securely communicate with the issuer 30 via the payment network 40.

In general, a user device 10 can interact with a merchant payment terminal 20 to conduct a transaction involving payment from the user to the merchant as follows:
Once the merchant system 70 has established through interaction with a user, the goods and/or service which the user wishes to procure, the merchant system 70 requests an amount in payment by displaying at the display 24 of the payment terminal 20 a first machine-readable optical label encoding at least the transaction amount and currency, although it will be appreciated that further transaction specific information can be encoded in the first machine-readable optical label to improve security as will be discussed below. The user device 10 may presented in relation to the display 24 of the payment terminal 20, with the front face of the device 10 including the camera 16 and display 14 held in front of the display 24, so that the camera 16 can image the first machine-readable optical label. The user device 10 processes the content of the first machine-readable optical label and generates payment information in response before encoding this within a second machine-readable optical label and displaying this on display 14. The payment terminal camera 26 reads the second machine-readable optical label and after some validation, if required, sends the information encoded in the second machine-readable optical label (possibly having converted it to an industry standard transactional message) to their acquirer 50, who will then pass the transaction to the payment network 40 for forwarding on to the issuer 30 for authorization of the transaction. The issuer 30 returns authorisation (or not) to the payment network 40, who in turn passes the response to the acquirer 50 and finally on to the merchant and to the terminal 20 and this is in turn communicated to the merchant system 70 to enable the transaction to be completed. It is possible that at the same time, the payment network arranges for the transfer of funds from the user's account with the issuer 30 to the merchant's account with the acquirer 50. Alternatively, the standard 'clearing and settlement' processes would be followed.

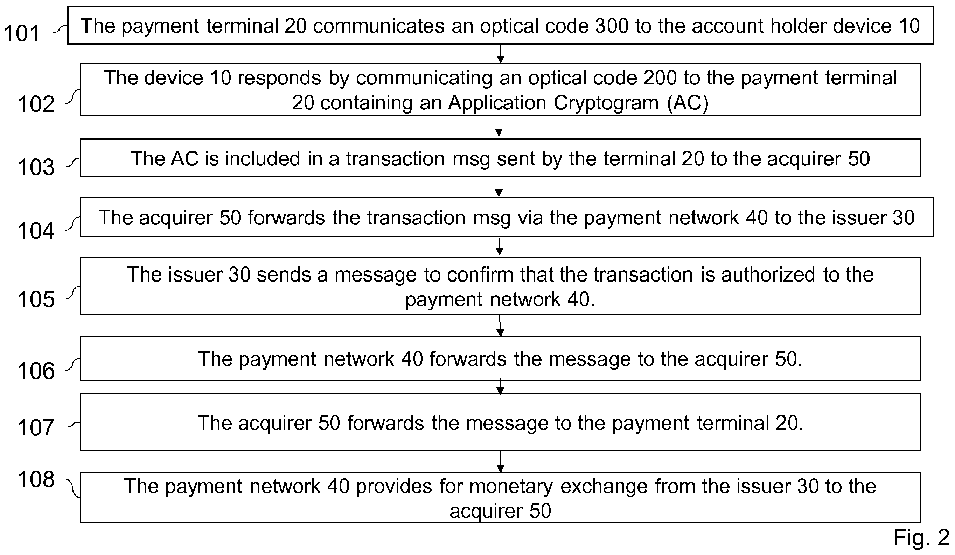

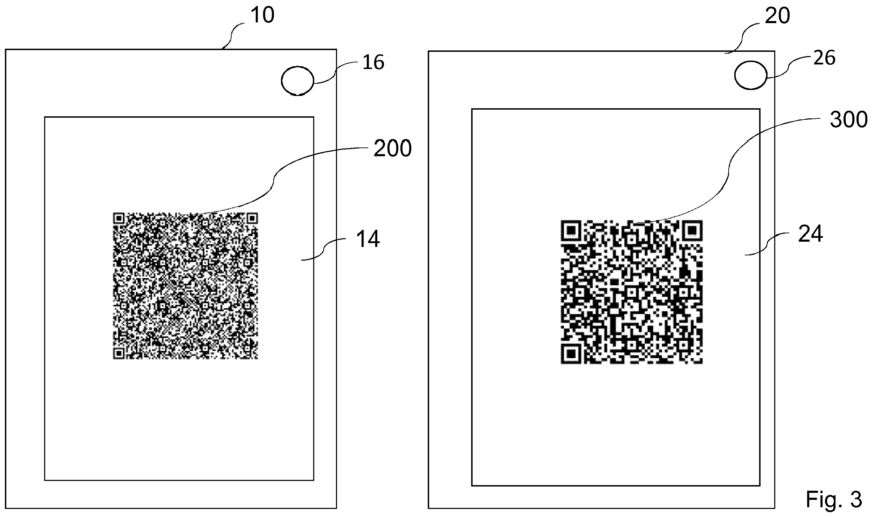

Referring now to Figures 2 and 3 where the method is described in more detail. As described, the method includes a 2-leg transaction where in a first leg, the payment terminal 20 displays a machine-readable optical label 300 on the display 24 of the payment terminal 20 for imaging by a camera 16 of the device 10; and in response, in a second leg, the application 12 produces a second machine-readable optical label 200 for imaging by the camera 26 of the terminal 20.

It will be appreciated that the machine-readable optical labels 200, 300 used in this exemplary method can be any type of optical label or labels that contain information that can be extracted with a suitable scanning device. In the embodiment, the machine-readable optical labels are two-dimensional barcodes, such as the Quick Response, QR™, codes 200, 300 as shown in Figure 3. However, it will be understood that the machine-readable optical label is not limited to a two dimensional barcode and could equally be implemented using one dimensional barcode(s) or a sequence of more than one optical label.

In the embodiment, the information exchanged between the user device 10 and terminal 20 using the machine-readable optical labels 200, 300 enables cryptographic authentication of the user's payment card using Europay, MasterCard and Visa (EMV) Combined Dynamic Data Authentication (CDA) or other suitable cryptographic methods (including DDA, and others). This may include adding in data such as an unpredictable number, date/time and more (as shown later).

Thus, the machine-readable optical label 300 comprises data including a request for the device 10 to generate an EMV Application Cryptogram (AC) (Authorization Request Cryptogram, ARCQ) to complete the payment transaction, which can be read from the mobile device's front camera 16, while in the second leg, the application 12 produces a second machine-readable optical label 200 comprising the requested EMV Application Cryptogram and displays the second machine-readable optical label 200 to complete the transaction.

Once the application 22 receives the information from the machine-readable optical label 200 displayed at the device 10 via the camera 26 of the payment terminal 20, it verifies whether the machine-readable optical label 200 is generated by a genuine application 12.

The application 22 extracts the EMV Application Cryptogram and associated EMV data from the scanned machine-readable optical label 200 and, if verified, sends it to the issuer 30 via the acquirer 50 and payment network 40 for authorizing the transaction. Typically, the merchant 70 will use this data, along with other transaction related data, in order to generate a correctly formatted transaction request message to their acquirer 50 (or other payment service provider (PSP)). For example, this may be in the format of an ISO 8583 0100 message.

The transaction data encoded by the application 22 in the machine-readable optical label 300 comprises information about the specific transaction that is to be performed such as, but not limited to, an amount to be transferred, a currency, an unpredictable number (UN), a date and a time of when the transaction was requested. The specific transaction data is a list of data known as a Card Risk Management Data Object List (CDOL) that the application 12 requires during generation of an EMV Application Cryptogram for the transaction. In the embodiment, the application 22 employs a static CDOL list, so enabling the machine-readable optical label 300 to be generated immediately the amount of the transaction is known and without requiring any previous interaction with the user device 10. Nonetheless, it will be appreciated that the CDOL list could be a dynamic list although this would likely involve a transaction comprising more than 2 legs. A transaction can most efficiently be implemented using 2 legs, but can be generally extended to support multiple data exchanges between device and terminal.

Table 1 includes a list of specific transaction data and the ARCQ generated by the payment terminal 20. The list is provided for exemplary purposes only it will be appreciated that some of the fields may not be required or that others can be employed. Additionally EMV tags rather than the format tags shown in the table may be used to refer to the specific values described below.

**Table 1: Payment data from payment terminal**

| **Payment data from payment terminal:** | **Description** |
|---|---|
| BRANDS: | Brands supported |
| For example: MC,MA,V | |
| UN: | Unpredictable Number (UN) |
| For example: 083748 | |
| CUR: | Transaction currency |
| For example: 0826 | |
| AMT: | Transaction amount |
| For example: 000000001099 | |
| TYPE: | Offline Data Authentication (ODA) type |
| For example: CDA | |
| AC: | Request for the device 10 to generate an EMV Application Cryptogram |
| For example: ARQC | |
| TERMTYPE: | Terminal type |
| For example: POSATTENDED | |
| TERMCTRY: | Terminal country |
| For example: 0826 | |
| TXNDT(mmddyyyyhhmmss): | Transaction date/time |
| For example: 01302018130123 | |
| TXTYP: | Transaction type |
| For example: PURCH | |
| TVR: | Terminal Verification Results |
| For example 0000000000 | |
| MCC: | Merchant category code |
| For example: 1234 | |
| MERNAMLOC: | Merchant name and location |
| For example: ABC123XYZ | |

As indicated, in the above example, the ODA type chosen is CDA, but it will be appreciated that in variants of the present embodiment, approaches other than CDA including Dynamic Data Authentication (DDA), Static Data Authentication (SDA) or indeed any other type of authentication could be employed.

Referring to Figure 2, after generating the machine-readable optical label 300, the payment terminal 20 communicates the machine-readable optical label 300 to the user device 10 by displaying the machine-readable optical label 300 on a display 24 of the payment terminal 20 at step 101. Note that in a terminal such as a POS terminal equipped with a card reader and possibly a contactless card reader, this step may be performed in parallel with the terminal attempting to detect the presence of a physical card or an NFC enabled device - whether a mobile device or a wearable. If such a card or device is detected, the transaction can proceed in a conventional manner.

On the other hand, if the account holder is not using a payment card or their device is not NFC enabled or presented closely enough to the terminal that this may be detected and if the account holder wishes to complete the transaction, the application 12 may be launched to complete the payment. Note that the application 12 may be launched manually by the user or automatically, for example, upon another application recognizing a suitable machine-readable optical label 300 displayed at the payment terminal 20 via any imaging device 16 in communication with the device 10. Further embodiments may have this wallet type functionality embedded into the operating system.

Once launched, where the user has added details for more than one payment card to the application 12 and where the user does not have a default payment card, the user may need to interact with the application 12 to select from one or more possible cards before continuing.

As well as a conventional Primary Account Number (PAN), payment card information may alternatively comprise a Virtual Card Number (VCN) or token associated with one of the one or more payment cards of the cardholder. A VCN typically comprises, similarly to a physical payment card, at least three elements: a payment card number, an expiry date, a Card Verification Code (CVC) and a date of expiration. A payment token is similar to a VCN, but typically adheres to other scheme or industry rules, and may have additional checks taking place (e.g. a token may be tied to specific transaction types or merchants). Generally, the payment card number consists of sixteen digits, as for a physical payment card. Options for the VCN may be added to these three elements of the VCN, such as a time usage restriction, a maximum transaction limit or maximum recurrence limit.

Nonetheless, once a payment card is selected, the account holder authenticates the transaction by presenting the user device 10 to allow interaction with the payment terminal 20 and to complete the transaction. Before a code is generated, the consumer may be prompted to authenticate (e.g. with a fingerprint or a password or possibly biometric authentication). It will be appreciated that more or less interaction with a user may be also be required to indicate acceptance according to the user preference or design of the application 12. So, for example, the transaction could proceed without any interaction from the user other than presenting their user device 10 to the terminal or alternatively, authentication of the transaction may be confirmed once the application 12 is opened on the user device 10 or after a user has selected a payment card. Alternatively, the application 12 may guide the user through a series of GUIs through the steps required to complete the transaction.

Note that, if the application 12 is not installed on the user device 10, possibly in response to another application detecting the machine-readable optical label 300, the account holder may be presented with an option contained within a prompted message (again in the form of a link or button or other user selectable element) to download the application 12, for example from a dedicated website or an application store, before continuing the process (this link may be encoded in the machine-readable optical label 300).

In this case, once the application 12 is downloaded and installed on the user device 10, the account holder may be prompted to log in to an existing account of the account holder on the application server; or the application 12 may need to create an account on the application server if necessary.

In any case, the user device camera 16 scans the machine-readable optical label 300 displayed at the payment terminal 20, or the device otherwise obtains information from the machine-readable optical label 300 stored in a memory of the device 10.

At this point, the application 12 may choose to generate an EMV Application Cryptogram and generate a second machine-readable optical label 200 comprising the EMV Application Cryptogram and any additional information required to complete the payment transaction. During calculation of the AC, the application 12 uses the specific transaction data to construct the EMV Application Cryptogram in response to the ARCQ request.

There are three types of EMV Application Cryptogram that can be generated by the application 12:
- an Application Authentication Cryptogram (AAC) generated whenever the application 12 declines a transaction.
- An Authorisation Request Cryptogram (ARQC) generated whenever the application 12 requires that the transaction be approved online.
- a Transaction Certificate (TC) generated whenever the account holder application 12 approves a transaction without the need for an online transaction request. It is not considered likely that this will be used with this embodiment, and is included for completeness only.

The EMV Application Cryptogram may be wrapped in signed dynamic application data (SDAD) signature so that, when unwrapped, it can be sent by the payment terminal 20 via the acquirer 50 and the payment network 40 to the issuer 30 for authorization of the transaction. The SDAD signature comprises dynamic application data (DAD) signed with a private user device RSA (Rivest-Shamir-Adleman) key.

Table 2 includes a list of data generated by the user device 12 and comprising EMV Application Cryptogram and the additional information required to complete the payment transaction. Again, the list is provided for exemplary purposes only it will be appreciated that some of the fields may not be required or that others can be employed. Additionally EMV tags rather than the format tags shown in the table may be used to refer to the specific values described below.

**Table 2: Payment data from user device**

| **Payment data from user device** | **Description** |
|---|---|
| TP: | TOKEN PAN |
| For example: 5432123456789012 | |
| EXP: | TOKEN PAN expiry |
| For example: 0520 | |
| PSN: | PAN sequence number |
| For example: 01 | |
| ISSCTRY: | Issuer country code |
| For example: 0826 | |
| ISSCUR: | Issuer currency code (application currency) |
| For example: 0826 | |
| CVM: | Indicator of what Cardholder Verification Method (CVM) is performed (biometric, pin, etc.) |
| For example: 01 | |
| CAPKI: | Certification Authority (CA) |
| For example: 05 | Public Key Index |
| IPKE: | Issuer (ISS) Public Key Exponent |
| For example: 03 | |
| IPKR: | ISS Public Key Remainder |
| For example: 9BBC78......33751 | |
| IPKC: | ISS Public Key Certificate |
| For example: 4AEF39......FE9F4 | |
| CID: | Cryptogram Information Data |
| For example: 80 | |
| AIP: | Application Interchange Profile |
| For example: 1B80 | |
| ATC: | Application transaction counter |
| For example: 004B | |
| SDAD: | Signed Dynamic Application Data |
| For example: 5F88CC...... B4780F | |
| IAD: | Issuer Application Data |
| For example: 0110A04005220000000000000000000000FF | |

The SDAD is encoded by a device-unique RSA key known only at the device 10, for example by the application 12. The SDAD is converted into the machine-readable optical label 200 and provided to the payment terminal 20 as cryptographic information contained in the machine-readable optical label 200 to allow authentication of the payment details provided by the device 10.

When the second machine-readable optical label 200 is communicated to the payment terminal 20, the payment terminal 20 may proceed with a standard EMV flow transaction. In particular, the cryptographic information can be validated by both the payment terminal 20 to verify the authenticity of the payment application 12 and by an authorization system of the issuer 30 to validate the EMV Application Cryptogram. By verifying the authenticity of the device application 12, replay attacks are prevented, since the EMV Application Cryptogram is tied to the specific amount, currency and UN from the payment terminal 20. It is appreciated that using the above embodiment, there is no need to rely on UN generated by the mobile device.

In an aspect, a Consumer Device Cardholder Verification Method (CDCVM) can be implemented. CDCVM is a type of consumer verification method (CVM) supported by the card networks when assessing transactions originating from mobile devices. Verification is used to evaluate whether the person presenting the payment instrument is the legitimate owner of the instrument, and affects where the liability lies for fraudulent transactions. One such implementation of CDCVM that could be optimal ergonomically with this implementation would be for the mobile device to use the rear camera to perform biometric recognition such as face or iris recognition. This would mean that the mobile device would be held with the screen facing the terminal, and the rear facing the consumer, thereby allowing for the reading/transmission of codes, and the scanning of the consumer's face or iris. For each EMV transaction, the payment terminal 20 and the supporting payment network applications 22 and 12 of the respective devices decide which customer verification method should be used. To decide, the payment terminal 20 and the user device 10 may compare the verification methods that they each support, and they may use the first one that they both support. Thus, in variants of the above example, the two dimensional machine-readable optical label could indicate which CDCVM was performed on the user device 10, and provide indications whether or not the user device 10 has been tampered with. This enhancement to the current CDA mechanism to pass additional information to the payment terminal 20 may be useful to meet the Payment Service Directive II (PSD2) requirements.

At step 102, the user device 10 communicates the second machine-readable optical label 200 to the payment terminal 20 by displaying the machine-readable optical label on a display 14 of the device 10.

As result of the displaying, the machine-readable optical label 200 may be scanned and may be stored in a memory of the payment terminal 20. In particular, the application 22 at the payment terminal 20 scans the machine-readable optical label 200 displayed at the user device 10, or otherwise stored in a memory of the payment terminal 20. This allows verification of the SDAD signature.

The scanning may be performed by the application 22 or by any other application executing at the payment terminal 20. In this example the application 22 operates a scanning device to capture the machine-readable optical label 200. The scanning device may be front camera of the payment terminal 20 but could also comprise a connected camera, an integrated camera, a processor, or any other suitable imaging or processing device.

From this point onwards, the processing of the transaction can be performed as any EMV-like transaction with the data extracted from the machine-readable optical label 200 being added to a standard payment message (e.g. ISO8583 0100 messages).

So, for completeness, verifying the SDAD comprises verifying that the issuer certificate is signed by a trusted issuer's RSA key using the related certified authority (CA) public RSA key, verifying the device RSA public key in the device certificate using the issuer's RSA public key, and verifying the SDAD signature using the device's RSA public key. In this manner it is verified that the machine-readable optical label 200, and therefore the EMV Application Cryptogram, is generated by a genuine application 12.

Subsequently, the EMV Application Cryptogram can be unwrapped from the signed data application (SDAD) using the device RSA public key.

At steps 103 and 104 the EMV Application Cryptogram is sent in a transaction request by the payment terminal 20 to the issuer 30 via the acquirer 50 and payment network 40 for authorization of the transaction. At this point the transaction goes online and EMV Application Cryptogram is sent to the authorization system of the issuer 30 where the authorisation is performed. The authorization comprises authentication of the EMV Application Cryptogram and possibly performing known specific anti-fraud measures, for example, determining that a transaction pattern for the account connected to the payment card does not indicate fraudulent behaviour. Also, the issuer may verify whether there are enough funds in the account of the account holder to proceed with the transaction and may take into account other anti-fraud measures.

Upon authorization of the transaction, the issuer 30 confirms that the transaction is authorized to the payment network 40, step 105, and the payment network in turn relays this authorisation via the acquirer 50 to the payment terminal 20, steps 106, 107.

Finally, the payment network 40 communicates with the issuer 30 and the acquirer 50 and provides for monetary exchange using bank accounts of the account holder and the merchant, step 108, typically through a clearing and settlement process.

While certain embodiments of the application have been described, these have been presented by way of example only, and are not intended to limit the scope of the disclosure. Indeed, the method and system described herein may be embodied in a variety of other forms. Furthermore, various omissions, substitutions and changes in the form of the method and system described herein may be made.

For example, it will be understood that the machine-readable optical labels 200, 300 may be communicated between the device 10 and the payment terminal 20 via any other trusted device acting as a relay for the device 10. For example the relay device can be another mobile device arranged to securely communicate with the device 10, using, for example, email, Instant Messaging (IM), Multimedia Messaging Service (MMS) or any suitable form of messaging. The information for the labels 200, 300 can be communicated in either image form or in data form with conversion between image and data form being performed by the relay device.

While the above example has been described for authorising a transaction, it will be appreciated that the transaction could equally be used to pre-authorise transfer of funds for a transaction or for real time funds transfers.

The words comprises/comprising when used in this specification are to specify the presence of stated features, integers, steps or components but does not preclude the presence or addition of one or more other features, integers, steps, components or groups thereof.

## Claims

1. A method operable at a payment terminal (20), for conducting a transaction, the method comprising the steps of:
displaying (101) on a display (24) of the payment terminal (20) a first machine-readable optical label (300) encoding transaction data obtained from a merchant (70), said transaction data including at least an amount and a currency for said transaction;
imaging (102) by a scanning device (26) of the terminal (20) a second machine-readable optical label (200) produced by a user device in response to receiving data for said first machine-readable optical label (300) and encoding payment details for said transaction; and
providing (103) data from said second machine-readable optical label (200) to a payment network for authorisation of said transaction.

2. A method according to claim 1 further comprising verifying a validity of the second machine-readable optical label (200) before providing said data from said second machine-readable optical label (200) to said payment network.

3. A method according to claim 1 further comprising the step of monitoring for the presence of one or both of: an near field communication, NFC, enabled payment device or a payment card while displaying said first machine-readable optical label (300).

4. A method according to claim 1 wherein said first and second machine-readable optical labels (200, 300) comprise respective QR™ codes.

5. A method according to claim 1 wherein said data encoded in said first and second machine-readable optical labels (200, 300) is compliant with a Europay, Mastercard and Visa Combined Dynamic Data Authentication, EMV CDA, protocol.

6. A method according to claim 5 wherein said data for said first machine-readable optical label (300) is encoded based on a static Card Risk Management Data Object List, CDOL.

7. A method according to claim 1 further comprising one or both of:
displaying on the display (24) a further machine-readable optical label encoding further transaction data; and
imaging by the scanning device (26) a further machine-readable optical label produced by the user device as part of said transaction.

8. A payment terminal arranged to perform the steps of any one of claims 1 to 7, the payment terminal comprising any of: a dedicated Point-of-Sale, POS, terminal, a POS terminal integrated with a merchant system, or an Internet client device.

9. A payment terminal according to claim 8 comprising either: an integral display and camera or being arranged to connect to a separate display or camera.

10. A method operable at a user device (10), for conducting a transaction, the method comprising the steps of:
receiving (101) at the user device (10) data for a first machine-readable optical label (300) encoding transaction data obtained from a merchant (70), said transaction data including at least an amount and a currency for said transaction; and
causing (102) to be displayed a second machine-readable optical label (200), encoding data comprising payment details for said transaction and produced by the user device in response to receiving said first machine-readable optical label (300).

11. A method according to claim 10 wherein said causing comprises either:
displaying said second machine-readable optical label on a display of said user device; or
sending said data comprising payment details for display to a relay device

12. A method according to claim 11 wherein said receiving comprises either:
receiving said data from a relay device; or receiving said data from a scanning device of said user device.

13. A method according to claim 10 comprising displaying said second machine-readable optical label on a display of said user device located on a first surface of the user device including a first scanning device for reading said first machine-readable optical label (300) and further comprising biometrically identifying a user of the user device with a second scanning device located on a second surface of the user device opposite said first surface.

14. A method according to claim 10 further comprising one or both of:
receiving data for a further machine-readable optical label encoding further transaction data; and
causing to be displayed a further machine-readable optical label produced by the user device as part of said transaction.

15. A user device comprising any one of a: smartphone, tablet or general purpose computer incorporating a payment application arranged to perform the steps of any of claims 10 to 14.

16. A user device according to claim 15 comprising either: an integral display and camera; or being arranged to connect to a separate display or camera.

17. A computer program product which when executed on a computing device is arranged to perform the steps of any of claims 1 to 7 or claims 10 to 14.
